# EUROPÄISCHE PATENTSCHRIFT

(11) **EP 4 048 915 B1**
(45) Veröffentlichungstag und Bekanntmachung des Hinweises auf die Patenterteilung: **11.10.2023**
(21) Anmeldenummer: 20797069.0
(22) Anmeldetag: 21.10.2020
(51) Int. Cl.: F16D 65/00

(54) **BREMSSTAUBPARTIKELFILTER-ANORDNUNG, SCHEIBENBREMSENANORDNUNG MIT EINER BREMSSTAUBPARTIKELFILTER-ANORDNUNG UND FAHRZEUG MIT EINER SCHEIBENBREMSENANORDNUNG**
BRAKE DUST PARTICLE FILTER ARRANGEMENT, DISC BRAKE ARRANGEMENT WITH SAID FILTER ARRANGEMENT, VEHICLE WITH SAID DISC BRAKE ARRANGEMENT
DISPOSITIF DE FILTRE DE PARTICULES DE POUSSIERE DE FREIN, FREIN À DISQUE COMPERTANT LEDIT DISPOSITIF DE FILTRE, VÉHICULE AVEC LEDIT FREIN À DISQUE

(30) Priorität: 22.10.2019 DE 102019128470
(43) Veröffentlichungstag der Anmeldung: 31.08.2022
(73) Patentinhaber: MANN+HUMMEL GmbH, 71636 Ludwigsburg (DE)
(72) Erfinder: BOCK, Lukas, 74321 Bietigheim-Bissingen (DE); JESSBERGER, Thomas, 71679 Asperg (DE); KÜMMERLING, Volker, 74321 Bietigheim-Bissingen (DE); EVLEKLI, Coskun, 71332 Waiblingen (DE); CORBA, Jan, 93466 Chamerau (DE); WELLER, Benedikt, 71711 Steinheim (DE)
(74) Vertreter: Mann + Hummel Intellectual Property
(86) Internationale Anmeldenummer: PCT/EP2020/079601
(87) Internationale Veröffentlichungsnummer: WO 2021/078787

(56) Entgegenhaltungen:
- DE-A1-102012 016 836
- DE-A1-102019 105 862
- KR-Y1- 200 192 114
- US-A1- 2007 000 740

## Beschreibung

### Technisches Gebiet

Die Erfindung bezieht sich auf eine Bremsstaubpartikelfilter-Anordnung zum Auffangen von bei Betätigung einer Scheibenbremsenanordnung entstehenden Bremsstaubpartikeln, mit einem Bremsstaubpartikelfilter, der ein ringsegmentförmiges Gehäuse zur zumindest teilweisen Aufnahme einer Bremsscheibe der Scheibenbremsenanordnung aufweist, wobei das Gehäuse zwei zueinander axial beabstandete Gehäuseseitenwände und zwischen den Gehäuseseitenwänden eine sich in Umfangsrichtung erstreckende Gehäuseumfangswand aufweist, und mit zumindest einem in dem Gehäuse angeordneten Filterelement, und mit einem Haltebauteil, das dazu eingerichtet ist, den Bremsstaubpartikelfilter in einer relativ zu der Scheibenbremsenanordnung ortsfesten Einbaulage zu halten.

Ferner bezieht sich die Erfindung auf eine Scheibenbremsenanordnung mit einer Bremsscheibe, einem Bremssattel und einer derartigen Bremsstaubpartikelfilter-Anordnung sowie auf ein Fahrzeug mit einer derartigen Scheibenbremsenanordnung.

### Stand der Technik

Bei der Betätigung einer Scheibenbremsenanordnung entstehen Bremsstaubpartikel. Diese werden durch den Bremsabrieb aufgrund von Reibung zwischen einem Bremsbelag der Scheibenbremsenanordnung und einer Bremsscheibe der Scheibenbremsenanordnung erzeugt. Diese Bremsstaubpartikel sollen möglichst nicht in die Umgebung der Scheibenbremsenanordnung entweichen, da sie eine (Fein-) Staubbelastung der Umgebungsluft erzeugen. Diese (Fein-) Staubbelastung ist schädlich für die Umwelt und den Menschen. Sie soll vermieden werden. Zu diesem Zweck ist es bekannt, eine Bremsstaubpartikelfilter-Anordnung der oben beschriebenen Art vorzusehen. Das Gehäuse, in dem das Filterelement angeordnet ist, nimmt die Bremsscheibe der Scheibenbremsenanordnung zumindest teilweise auf. Hierdurch können Bremsstaubpartikel, die durch Bremsabrieb an der Bremsscheibe erzeugt werden, direkt in dem Gehäuse aufgenommen werden. Dort treffen sie auf das Filterelement und werden in dem Filterelement abgeschieden.

Eine solche Bremsstaubpartikelfilter-Anordnung ist für beliebige Anwendungen von Scheibenbremsenanordnungen geeignet. Sie kann sowohl für mobile als auch für stationäre Anwendungen vorgesehen sein. Bei den mobilen Anwendungen kann es sich um Fahrzeuge, beispielsweise PKW, LKW, Busse und Schienenfahrzeuge handeln. Eine stationäre Anwendung wäre beispielsweise die Wellenbremse einer Windkraftanlage.

Der Bremsstaubpartikelfilter muss in jedem Betriebszustand der Scheibenbremsenanordnung relativ zu dieser in der ortsfesten Einbaulage gehalten werden. Dies ermöglicht zum einen die effiziente Aufnahme der in der Scheibenbremsenanordnung erzeugten Bremsstaubpartikel. Zum anderen soll dadurch auch vermieden werden, dass ein eventuell vorhandener Bewegungsfreiraum (Spiel) in dem Ort des Bremsstaubpartikelfilters relativ zu der Scheibenbremsenanordnung die Laufruhe der Scheibenbremsenanordnung im Betrieb negativ beeinflusst. Ein solcher Bewegungsfreiraum würde dem Verschleiß der Bauteile des Bremsstaubpartikelfilters und gegebenenfalls der Scheibenbremsenanordnung Vorschub leisten und deren Lebensdauer herabsetzen. Der Bewegungsfreiraum des Bremsstaubpartikelfilters relativ zu der Scheibenbremsenanordnung kann in der Einbaulage grundsätzlich in drei (orthogonalen) Dimensionen auftreten: Zum einen in der Axialrichtung (die Richtung der Drehachse der Bremsscheibe); zum anderen in der Umfangsrichtung (die Richtung der Drehung der Bremsscheibe) und schließlich in der Radialrichtung (die Richtung der radialen Erstreckung der Bremsscheibe).

Zum anderen stellt der Bremsstaubpartikelfilter ebenso ein Servicebauteil der Bremsstaubpartikelfilter-Anordnung dar. Der Bremsstaubpartikelfilter bzw. das Filterelement muss nach einer gewissen Zeitdauer ausgetauscht, erneuert oder regeneriert werden. Dies macht den (zumindest teilweisen) Ausbau des Bremsstaubpartikelfilters aus der Bremsstaubpartikelfilter-Anordnung notwendig. Der beispielsweise gerade in automobilen Anwendungen der Bremsstaubpartikelfilter-Anordnung vorhandene Bauraum ist jedoch typischerweise sehr beschränkt. Daher kann es beim Ein-/Ausbau aufgrund von unkontrollierten Bewegungen des Bremsstaubpartikelfilters (beispielsweise aufgrund von Unachtsamkeiten des Monteurs) leicht zum Verkanten des Bremsstaubpartikelfilters mit umgebenden Bauteilen kommen. Eine Begrenzung des Bewegungsfreiraums des Bremsstaubpartikelfilters ist daher auch aus Gründen der "Führung" des Bremsstaubpartikelfilters beim Ein-/Ausbau aus der Bremsstaubpartikelfilter-Anordnung in dem vorhandenen Bauraum vorteilhaft.

Aus DE 10 2012 016 836 A1 ist eine Bremsstaubaufnahmevorrichtung für Kraftfahrzeuge bekannt, die ein Filterelement aufweist, das auswechselbar in einem Filteraufnahmeteil aufgenommen ist. Das Filterelement weist einen U-förmigen Querschnitt auf und ist in Radialrichtung in das Filteraufnahmeteil einsetzbar bzw. aus diesem entnehmbar.

### Offenbarung der Erfindung

Der Erfindung liegt daher die Aufgabe zugrunde, eine Bremsstaubpartikelfilter-Anordnung bereitzustellen, die den Bewegungsfreiraum zwischen dem Bremsstaubpartikelfilter und der Scheibenbremsenanordnung zumindest in der Umfangsrichtung und der Radialrichtung reduziert und eine möglichst einfache und weitgehend werkzeugfreie Montage/Demontage erlaubt.

Diese Aufgabe wird dadurch gelöst, wie es im beigefügten unabhängigen Anspruch 1 definiert ist, dass das Haltebauteil und das Gehäuse relativ zu einander zumindest bezüglich ihrer Winkellage in Umfangsrichtung und/oder ihrer Radiallage unmittelbar durch einen gegenseitigen Eingriff in der Einbaulage fixierbar sind. Das Haltebauteil wird vorzugsweise in der Einbaulage an einer Komponente der Scheibenbremsenanordnung befestigt sein. Es kann dort beispielsweise lösbar befestigt sein. Diese Befestigung kann beispielsweise durch Verschrauben erfolgen. Bei einem Einbau des Bremsstaubpartikelfilters in die Scheibenbremsenanordnung wird sodann der Bremsstaubpartikelfilter mit dem bereits an der Scheibenbremsenanordnung befestigten Haltebauteil in Eingriff gebracht. Dieser Eingriff in der Einbaulage immobilisiert das Gehäuse relativ zu dem Haltebauteil in der Einbaulage zumindest teilweise: Das Haltebauteil und das Gehäuse sind relativ zueinander bezüglich ihrer Winkellage in Umfangsrichtung und/oder ihrer Radiallage in der ortsfesten Einbaulage fixiert. Damit können einer und/oder zwei Freiheitsgrade (Umfangsrichtung, Radialrichtung) des Bewegungsfreiraums reduziert oder sogar eliminiert werden. Auch kann dies auf eine besonders einfache und leicht zu realisierende Art erfolgen: Das Haltebauteil und das Gehäuse sind unmittelbar durch einen gegenseitigen Eingriff in der ortsfesten Einbaulage fixierbar. Es kann damit weitgehend auf mittelbare Befestigungs- bzw. Fixierungsmittel, wie beispielsweise Schrauben, verzichtet werden. Die Montage und Demontage von Haltebauteil und Gehäuse relativ zueinander ist damit einfach durch Herstellen und Lösen des gegenseitigen Eingriffs zu realisieren. Es kann auf die Verwendung von zusätzlichem Werkzeug verzichtet werden. Der unmittelbare gegenseitige Eingriff von Haltebauteil und Gehäuse erfolgt vorteilhaft bereits zu Anfang einer Montage des Bremsstaubpartikelfilters. Hierdurch ergibt sich eine "Führung" des Gehäuses relativ zu dem Haltebauteil beim Überführen des Bremsstaubpartikelfilters in die Einbaulage. Sobald also der gegenseitige Eingriff zwischen dem Haltebauteil und dem Gehäuse hergestellt ist, sind beide Elemente relativ zueinander in ihrer Winkellage in Umfangsrichtung und/oder ihrer Radiallage immobilisiert. Sobald sich der Bremsstaubpartikelfilter in der ortsfesten Einbaulage befindet, kann er in seiner Position vorteilhaft zusätzlich mit einer mittelbaren Verbindung, beispielsweise mittels Verschraubens, an dem Haltebauteil fixiert werden.

Der gegenseitige Eingriff erfolgt mittels eines formschlüssigen Eingriffs zumindest einer männlichen Verbindungsgeometrie mit zumindest einer korrespondierenden weiblichen Verbindungsgeometrie, wobei die männliche Verbindungsgeometrie an dem Haltebauteil und die weibliche Verbindungsgeometrie an dem Gehäuse vorliegt oder umgekehrt.

Die männliche Verbindungsgeometrie kann an dem Haltebauteil und die weibliche Verbindungsgeometrie kann an dem Gehäuse vorliegen. Alternativ kann die männliche Verbindungsgeometrie an dem Gehäuse und die weibliche Verbindungsgeometrie kann an dem Haltebauteil vorliegen. Die männliche Verbindungsgeometrie und/oder die weibliche Verbindungsgeometrie können jeweils einstückig mit dem Haltbauteil bzw. dem Gehäuse ausgebildet sein. In diesem Fall können sie bei der Fertigung von Haltebauteil und Gehäuse direkt mit gefertigt werden. Die männliche Verbindungsgeometrie und/oder die weibliche Verbindungsgeometrie können jedoch ebenso vorteilhaft als zusätzliche Bauteile vorliegen. In diesem Fall können sie gegebenenfalls einfach an bestehenden Bremsstaubpartikelfiltern nachgerüstet werden. Die männliche Verbindungsgeometrie weist zumindest einen männlichen Verbindungsabschnitt auf. Die weibliche Verbindungsgeometrie weist zumindest einen weiblichen Verbindungsabschnitt auf. Der männliche Verbindungsabschnitt ist dazu eingerichtet, mit dem weiblichen Verbindungsabschnitt eine mechanische Verbindung mittels "Ineinandergreifens" herzustellen. Diese Verbindung bildet dann vorzugsweise den formschlüssigen gegenseitigen Eingriff der männlichen Verbindungsgeometrie mit der weiblichen Verbindungsgeometrie. Der gegenseitige Eingriff kann auf konstruktiv einfache Weise hergestellt werden.

Durch auf einander abgestimmte männliche und weibliche Verbindungsgeometrien an Bremsstaubpartikelfilter und Haltebauteil kann eine eindeutige Zuordnung einer vorbestimmten Paarung von Bremsstaubpartikelfilter und Halter als für eine bestimmte Scheibenbremsanordnung passend gewährleistet werden. Diese eindeutige Zuordnung kann durch Variationen der Abmaße und/oder Form der jeweiligen männlichen und weiblichen Verbindungsgeometrien für jede Paarung erfolgen.

So kann eine Fehlmontage von unpassenden Bremsstaubpartikelfiltern vermieden werden, was gravierende Folgen haben könnte, da beispielsweise bei Montage eines in Umfang und oder Radius für eine jeweilige Scheibenbremsanordnung nicht geeigneten Bremsstaubpartikelfilters eine Kollision mit bewegten Teilen droht.

Weiterbildungen der Erfindung sind jeweils in den abhängigen Ansprüchen angegeben.

Auch ist vorteilhaft, dass die männliche Verbindungsgeometrie oder die weibliche Verbindungsgeometrie an zumindest einer der Gehäuseseitenwände vorliegt, bevorzugt wobei die männliche Verbindungsgeometrie oder die weibliche Verbindungsgeometrie sich auf einer dem Filterelement abgewandten Seite der Gehäuseseitenwand von der Gehäuseseitenwand zumindest in Axialrichtung erstreckt.

Die Gehäuseseitenwände des Gehäuses eines Bremsstaubpartikelfilters stellen ein Bauteil dar, das in (in gewissen vorgegebenen Grenzen des vorhandenen Bauraums) in seiner Form modifiziert werden kann, ohne dabei die Funktionalität des Bremsstaubpartikelfilters negativ zu beeinflussen. Daher kann an und/oder in den Gehäuseseitenwänden besonders vorteilhaft eine zusätzliche Struktur, wie die männliche Verbindungsgeometrie oder die weibliche Verbindungsgeometrie vorliegen. Dabei werden im Inneren des Gehäuses das Filterelement, zumindest teilweise die Bremsscheibe und gegebenenfalls weitere Elemente aufgenommen. Der Bauraum innerhalb des Gehäuses ist also typischerweise systemisch bedingt beschränkt. Es ist daher vorteilhaft, die männliche Verbindungsgeometrie oder die weibliche Verbindungsgeometrie an einer dem Filterelement abgewandten Seite der Gehäuseseitenwand vorzusehen. Mit anderen Worten ist die männliche Verbindungsgeometrie oder die weibliche Verbindungsgeometrie vorteilhaft auf einer axial außen gelegenen Seite des Gehäuses vorgesehen. Dabei wird sich die männliche Verbindungsgeometrie (bzw. der männliche Verbindungsabschnitt) oder die weibliche Verbindungsgeometrie (bzw. der weibliche Verbindungsabschnitt) auch in der Axialrichtung erstrecken. Hierdurch wird eine axiale Komponente des gegenseitigen Eingriffs von männlicher Verbindungsgeometrie und weiblicher Verbindungsgeometrie geschaffen. Eine solche axiale Komponente kann zumindest die relative Winkellage von Haltebauteil und Gehäuse zueinander in Umfangsrichtung fixieren und damit einen Freiheitsgrad des Bewegungsfreiraums vermindern oder eliminieren.

Es ist bevorzugt, dass die weibliche Verbindungsgeometrie zumindest eine Nut mit einem sich in Radialrichtung erstreckenden Nutgrund und zwei in Umfangsrichtung gegenüberliegenden Nutflanken aufweist, vorzugsweise wobei die Nutflanken von dem Nutgrund in Umfangsrichtung graduell ansteigend ausgebildet sind.

Die Nut bildet in diesem Fall den weiblichen Verbindungsabschnitt der weiblichen Verbindungsgeometrie. Die "Höhendifferenz" zwischen dem Nutgrund und der Oberfläche des übrigen Bauteils (Haltebauteil oder Gehäuse) bildet die Erstreckung der weiblichen Verbindungsgeometrie in der Axialrichtung. Der Nutgrund erstreckt sich zumindest in Radialrichtung. Die Nutflanken bilden daher eine Begrenzung des Nutgrunds in Umfangsrichtung. Die Nutflanken sind dabei nicht als (rechteckiges) "Stufenprofil" ausgebildet, sondern liegen vorteilhaft mit einem "gekrümmten" Profil vor. Es wird ein gradueller Übergang vom Nutgrund zu der Oberfläche des übrigen Bauteils (Haltebauteil oder Gehäuse) bereitgestellt. Der Eingriff der männlichen Verbindungsgeometrie (bzw. des männlichen Verbindungsabschnitts) mit der weiblichen Verbindungsgeometrie (bzw. dem weiblichen Verbindungsabschnitt - hier: der Nut) miteinander reduziert so den Bewegungsfreiraum von Haltebauteil und Gehäuse relativ zueinander. Die graduelle Ausbildung der Nutflanken ermöglicht eine vorteilhafte Verteilung der dabei auftretenden Kräfte. Auch wird das in Eingriff bringen von männlicher Verbindungsgeometrie und weiblicher Verbindungsgeometrie erleichtert.

Auch ist von Vorteil, dass die Nut an einer in Radialrichtung nach innen weisenden Nutinnenstirnseite, die vorzugsweise in der weiblichen Verbindungsgeometrie ausgebildet ist, abgesetzt ist, wobei eine in Radialrichtung nach außen weisende Außenstirnseite der männlichen Verbindungsgeometrie in der Einbaulage an der Nutinnenstirnseite anliegt. Die Nut liegt in dem Bauteil (Haltebauteil oder Gehäuse) abgesetzt, das heißt nicht durchlaufend, vor. Die Absetzung der Nut stellt einen Anschlag für das korrespondierende männliche Verbindungsteil in Radialrichtung dar. Das Absetzen der Nut kann mittels einer entsprechenden Ausbildung der Nut in dem Bauteil (Haltebauteil oder Gehäuse) erfolgen. Dies ist in der Fertigung besonders einfach zu realisieren. Anderseits kann jedoch ebenso ein entsprechendes Absetzbauteil vorgesehen ein, mit dem die Nut abgesetzt wird. Es kann sich dabei beispielsweise um die Gehäuseumfangswand handeln. Das Absetzen der Nut bildet entsprechend an deren abgesetzten Ende eine Nutinnenstirnseite aus. Diese ist auf einer dem Nutgrund zugewandten Seite des abgesetzten Endes gelegen. Mit anderen Worten weist die Nutinnenstirnseite in der Radialrichtung nach innen. Die männliche Verbindungsgeometrie (bzw. der männliche Verbindungsabschnitt) weist eine zu der Nutinnenstirnseite korrespondierende Außenstirnseite auf. Diese weist in der Radialrichtung nach außen. Sie ist daher in der Einbaulage der Nutinnenstirnseite gegenüberliegend angeordnet. Die Außenstirnseite der männlichen Verbindungsgeometrie liegt in der ortsfesten Einbaulage an der Nutinnenstirnseite an. Damit wird ein Bewegungsfreiraum des Haltebauteils relativ zu dem Gehäuse in der Radialrichtung zumindest nach radial außen vermindert bzw. verhindert.

Es ist ebenso bevorzugt, dass der Nutgrund ein in Axialrichtung nach außen auskragendes Rastelement aufweist, das in der Einbaulage mit einer in Radialrichtung nach innen weisenden Innenstirnseite der männlichen Verbindungsgeometrie eingerastet ist.

Die in einer Radialrichtung nach innen weisende Innenstirnseite der männlichen Verbindungsgeometrie (bzw. des männlichen Verbindungsabschnitts) kann der in Radialrichtung nach außen weisenden Außenstirnseite der männlichen Verbindungsgeometrie gegenüberliegend angeordnet sein. In der Einbaulage "hintergreift" diese Innenstirnseite der männlichen Verbindungsgeometrie dann zumindest teilweise das Rastelement. Damit rastet die Innenstirnseite der männlichen Verbindungsgeometrie dann mit dem Rastelement der weiblichen Verbindungsgeometrie ein. Männliche Verbindungsgeometrie und weibliche Verbindungsgeometrie sind in gegenseitigem Eingriff. Das Absetzen der Nut einerseits vermindert bzw. verhindert den Bewegungsfreiraum des Haltebauteils relativ zu dem Gehäuse in der Radialrichtung zumindest nach radial außen. Das Rastelement andererseits vermindert bzw. verhindert den Bewegungsfreiraum des Haltebauteils relativ zu dem Gehäuse in der Radialrichtung zumindest nach radial innen.

Weiterhin ist vorteilhaft, dass die weibliche Verbindungsgeometrie zumindest ein über den Nutgrund auskragendes Arretierelement aufweist, das in der Einbaulage in einen in der Nut angeordneten Spundabschnitt der männlichen Verbindungsgeometrie eingreift bzw. den Spundabschnitt über- oder hintergreift. Bevorzugt ist das Arretierelement als Verlängerung einer Gehäuseseitenwand des Bremsstaubpartikelfilters ausgebildet, welche sich über den Nutgrund erstreckt.

Das Arretierelement kann vorteilhaft an einer Nutflanke vorliegen. Auch kann an jeder der zwei Nutflanken jeweils zumindest ein Arretierelement vorliegen. Der Spundabschnitt der männlichen Verbindungsgeometrie bildet den männlichen Verbindungsabschnitt der männlichen Verbindungsgeometrie, der mit dem weiblichen Verbindungsabschnitt der weiblichen Verbindungsgeometrie in der Einbaulage in Eingriff ist. Dabei werden die Nut und der Spundabschnitt vorzugsweise formschlüssig in der Einbaulage in Eingriff sein. Nut und Spundabschnitt können ein "Schwalbenschwanzprofil" aufweisen. Der Eingriff des Arretierelements mit dem Spundabschnitt kann auf verschiedene Arten ausgebildet sein. Zum einen kann in dem Spundabschnitt zumindest ein in Radialrichtung verlaufender Aufnahmeschlitz vorliegen, in dem das Arretierelement in der Einbaulage aufgenommen ist. Die Aufnahme des Arretierelements in dem Aufnahmeschlitz ist vorzugsweise formschlüssig ausgebildet. Das Arretierelement ist entsprechend eingerastet. Zum anderen kann der Spundabschnitt so in der Einbaulage in der Nut aufgenommen werden, dass er das Arretierelement in der Axialrichtung nach außen "hintergreift". Eine Bewegung des Spundabschnitts in der Axialrichtung nach außen wird dann verhindert bzw. vermindert. Die funktionelle Wechselwirkung des Arretierelements und des Spundabschnitts erlaubt hierbei eine Festlegung der Axialposition des Bremsstaubpartikelfilters bezüglich des Haltebauteils.

Noch weiter ist bevorzugt, dass der gegenseitige Eingriff herstellbar ist mittels zumindest einer in Axialrichtung auskragenden und sich in Umfangsrichtung erstreckenden Ringsegmentgeometrie der männlichen Verbindungsgeometrie, die mit einer korrespondierenden Ringsegmentaufnahme der weiblichen Verbindungsgeometrie in der Einbaulage, vorzugsweise formschlüssig, in Eingriff ist.

Die Ringsegmentgeometrie stellt eine alternative oder zusätzliche Ausgestaltung des männlichen Verbindungsabschnitts bereit. Die Ringsegmentaufnahme stellt entsprechend eine alternative oder zusätzliche Ausgestaltung des weiblichen Verbindungsabschnitts bereit. Das Auskragen der Ringsegmentgeometrie in Axialrichtung vermindert bzw. verhindert in dieser Ausführungsform den Bewegungsfreiraum des Haltebauteils relativ zum Gehäuse in der Radialrichtung. Die Erstreckung der Ringsegmentgeometrie in Umfangsrichtung vermindert bzw. verhindert den Bewegungsfreiraum des Haltebauteils relativ zum Gehäuse in der Umfangsrichtung.

Nicht zuletzt ist von Vorteil, dass die Ringsegmentaufnahme mittels eines ringsegmentförmigen Abschnitts einer radial nach innen weisenden Innenstirnseite der weiblichen Verbindungsgeometrie so ausgebildet ist, dass in der Einbaulage das Haltebauteil und das Gehäuse relativ zueinander in Umfangsrichtung bewegbar sind.

Das Haltebauteil und das Gehäuse werden so zwar in ihrer Radiallage in der Einbaulage relativ zueinander ortsfest fixiert, nicht jedoch in ihrer Winkellage in Umfangsrichtung. Damit bleibt ein "Nachkorrigieren" der Winkellage des Haltebauteils relativ zum Gehäuse in der Einbaulage zunächst möglich. Der Bremsstaubpartikelfilter kann so abschließend in seine Einbaulage gedreht werden. In dieser Einbaulage wird er dann ortsfest, beispielsweise mittels Schrauben, fixiert.

Ferner kann vorteilhaft vorgesehen sein, dass eine umfangsmäßige Ausdehnung der männlichen Verbindungsgeometrie und der weiblichen Verbindungsgeometrie in Radialrichtung variabel ist, wobei insbesondere die umfangsmäßige Ausdehnung der männlichen Verbindungsgeometrie und der weiblichen Verbindungsgeometrie in einer nach radial außen weisenden Richtung abnimmt. Hierdurch kann eine besonders gute und insbesondere spielfreie relative Positionierung des Bremsstaubpartikelfilters und des Haltebauteils ermöglicht werden. Diese Weiterbildung der Erfindung eignet sich sowohl für die Ausführung der weiblichen Verbindungsgeometrie als Nut als auch für die Ausführung der weiblichen Verbindungsgeometrie als Ringsegmentaufnahme. Bevorzugt kann die Nut bzw. die Ringsegmentaufnahme sich nach radial außen hin verjüngen, wodurch sich ein zugespitztes bzw. konisches Profil in Radialrichtung ergibt.

Die Erfindung betrifft weiterhin eine Scheibenbremsenanordnung mit einer Bremsscheibe, einem Bremssattel und einer oben beschriebenen Bremsstaubpartikelfilter-Anordnung. Eine solche Scheibenbremsenanordnung weist die mit der erfindungsgemäßen Bremsstaubpartikelfilter-Anordnung verbundenen Vorteile auf.

Die Erfindung betrifft schließlich ein Fahrzeug mit einer derartigen Scheibenbremsenanordnung, wobei das Haltebauteil an einem Fahrwerksbauteil des Fahrzeugs, insbesondere einem Achsschenkel, bevorzugt an einem Bremssattelhalter, bezüglich eines Bremssattels der Scheibenbremsenanordnung ortsfest befestigt ist.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, Beschreibung und Ansprüche enthalten zahlreiche Merkmale in Kombination.

Es zeigen beispielhaft:
- Figur 1a: eine erste Ausführungsform der Bremsstaubpartikelfilter-Anordnung in einer Scheibenbremsenanordnung, wobei ein Bremsstaubpartikelfilter nicht in einer Einbaulage ist;
- Figur 1b: die erste Ausführungsform der Bremsstaubpartikelfilter-Anordnung in der Scheibenbremsenanordnung, wobei der Bremsstaubpartikelfilter in der Einbaulage ist;
- Figur 2a: ein Haltebauteil und ein Gehäuse eines Bremsstaubpartikelfilters nach einer zweiten Ausführungsform der Erfindung, wobei das Haltebauteil und das Gehäuse nicht in der Einbaulage sind;
- Figur 2b: das Haltebauteil und das Gehäuse des Bremsstaubpartikelfilters nach der zweiten Ausführungsform der Erfindung, wobei das Haltebauteil und das Gehäuse in der Einbaulage sind;
- Figur 3a: ein Haltebauteil und ein Gehäuse eines Bremsstaubpartikelfilters nach einer dritten Ausführungsform der Erfindung, wobei das Haltebauteil und das Gehäuse nicht in der Einbaulage sind;
- Figur 3b: die dritte Ausführungsform der Bremsstaubpartikelfilter-Anordnung in einer Scheibenbremsenanordnung, wobei ein Bremsstaubpartikelfilter in der Einbaulage ist;
- Figur 4a: ein Haltebauteil und ein Gehäuse eines Bremsstaubpartikelfilters nach einer vierten Ausführungsform der Erfindung, wobei das Haltebauteil und das Gehäuse nicht in der Einbaulage sind;
- Figur 4b: das Haltebauteil und das Gehäuse des Bremsstaubpartikelfilters nach der vierten Ausführungsform der Erfindung, wobei das Haltebauteil und das Gehäuse in der Einbaulage sind.

### Ausführungsformen der Erfindung

Die Figuren zeigen lediglich Beispiele und sind nicht beschränkend zu verstehen.

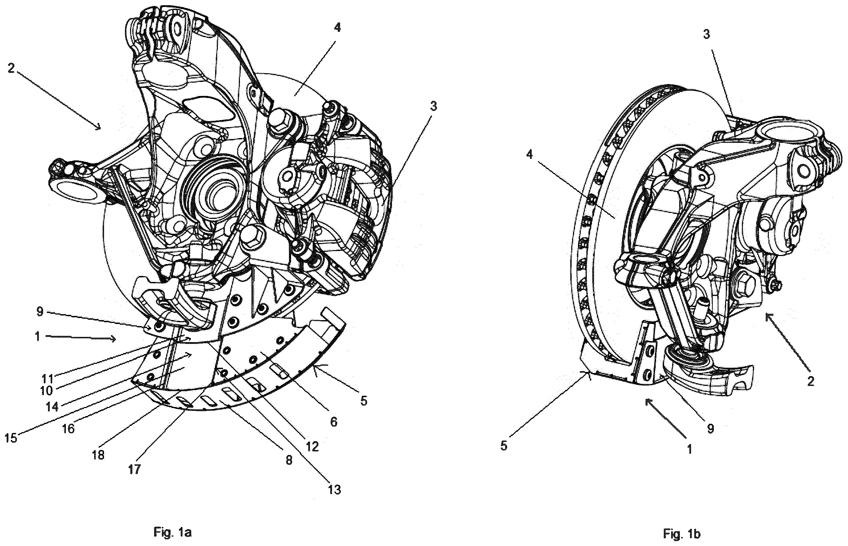

Figur 1a zeigt eine Bremsstaubpartikelfilter-Anordnung 1 in einer Scheibenbremsenanordnung 2. Die Scheibenbremsenanordnung 2 weist einen Bremssattel 3 und eine Bremsscheibe 4 auf. Die Bremsstaubpartikelfilter-Anordnung 1 weist ein ringsegmentförmiges Gehäuse 5 mit einer ersten Gehäuseseitenwand 6 und einer zweite Gehäuseseitenwand 7 auf. Die erste Gehäuseseitenwand 6 und die zweite Gehäuseseitenwand 7 erstrecken sich in einer Umfangsrichtung und sind axial beabstandet. Zwischen ihnen verläuft eine Gehäuseumfangswand 8 in Umfangsrichtung. Das ringsegmentförmige Gehäuse 5 nimmt die Bremsscheibe 4 zumindest teilweise auf. In ihm ist ein Filterelement (nicht dargestellt) angeordnet. Weiterhin weist die Bremsstaubpartikelfilter-Anordnung 1 ein Haltebauteil 9 auf, das an der Scheibenbremsenanordnung 2 befestigt ist.

Das Haltebauteil 9 weist eine männliche Verbindungsgeometrie 10 auf, die vorliegend einen Spundabschnitt 11 aufweist. Der Spundabschnitt 11 weist eine in Radialrichtung nach außen weisende Außenstirnseite 12 auf. Eine korrespondierende weibliche Verbindungsgeometrie 13 liegt in der ersten Gehäuseseitenwand 6 vor. Die weibliche Verbindungsgeometrie 13 weist als einen weiblichen Verbindungsabschnitt eine Nut 14 auf. Die Nut 14 wiederum weist einen Nutgrund 15 und eine erste Nutflanke 16 und eine zweite Nutflanke 17 auf. Die Nut 14 ist in der ersten Gehäuseseitenwand 6 an einer in Radialrichtung nach innen weisenden Nutinnenstirnseite 18 abgesetzt. Das Absetzen der Nut 14 ist vorliegend mittels der Gehäuseumfangswand 8 realisiert. Ebenso ist in dieser ersten Ausführungsform zu erkennen, dass die erste Nutflanke 16 und die zweite Nutflanke 17 als von dem Nutgrund 15 aus graduell ansteigend ausgebildet sind.

In Fig. 1a ist die Bremsstaubpartikelfilter-Anordnung 1 während einer Montage gezeigt. Das Gehäuse 5 wird mit dem Haltebauteil 9 in Eingriff gebracht. In einer ortsfesten Einbaulage hält das Haltebauteil 9 den Bremsstaubpartikelfilter bzw. das Gehäuse 5 dann relativ zu der Scheibenbremsenanordnung 2 fixiert. Diese Einbaulage ist in Fig. 1b gezeigt.

Bei einer derartigen Montage des Bremsstaubpartikelfilters bzw. des Gehäuses 5 an dem Haltebauteil 9 bzw. der Scheibenbremsenanordnung 2 soll der Bewegungsfreiraum des Gehäuses 5 relativ zu dem Haltebauteil 9 gering gehalten werden. Dies ist einerseits sinnvoll, da beispielsweise in automobilen Anwendungen typischerweise nur ein sehr begrenzter Bauraum zur Verfügung steht. In diesem soll eine Bewegung des Bremsstaubfilters bzw. des Gehäuses 5 während der Montage möglichst vermieden werden, um ein Verkanten desselben im Bauraum an anderen Bauteilen zu verhindern. Es ist jedoch zum anderen sinnvoll, den Bewegungsfreiraum auch in der Einbaulage zu reduzieren, um Verschleißerscheinungen der Komponenten vorzubeugen. Dies wird durch den gegenseitigen Eingriff der männlichen Verbindungsgeometrie 10 und der weiblichen Verbindungsgeometrie 13 erreicht. Dieser wird über den Eingriff des Spundabschnitts 11 mit der Nut 14 hergestellt. Am Beginn der Montage kann dieser Eingriff eine "Führung" des Gehäuses 5 entlang des Haltebauteils 9 in Richtung auf die Einbaulage bewirken. Der Eingriff des Spundabschnitts 11 mit der Nut 14 fixiert das Haltebauteil 9 relativ zum Gehäuse 5 in ihrer Winkellage in Umfangsrichtung zueinander. In der Einbaulage liegt die in Radialrichtung nach außen weisende Außenstirnseite 12 des Haltebauteils 9 auch an der in Radialrichtung nach innen weisenden Nutinnenstirnseite 18 an. Hierdurch wird das Haltebauteil 9 relativ zu dem Gehäuse 5 in der Radiallage fixiert. Der Bewegungsfreiraum von Haltebauteil 9 relativ zu dem Gehäuse 5 wird in zwei Freiheitsgraden reduziert bzw. eliminiert. Ein Bewegungsfreiraum in der Axialrichtung ist durch den gegenseitigen Eingriff von Spundabschnitt 11 und Nut 14 ebenso reduziert bzw. eliminiert.

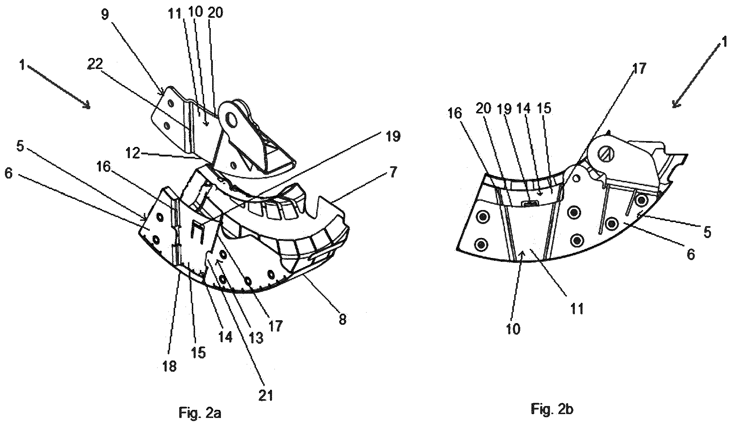

Fig. 2a zeigt eine zweite Ausführungsform der Bremsstaubpartikelfilter-Anordnung 1, in der das Haltebauteil 9 und das Gehäuse 5 nicht in der Einbaulage sind. Die Einbaulage ist in Fig. 2b gezeigt. Die Funktion der bisher beschriebenen Merkmale der erfindungsgemäßen Bremsstaubpartikelfilter-Anordnung 1 ist hier identisch zu der in Figs. 1a und 1b.

Zusätzlich weist die Bremsstaubpartikelfilter-Anordnung 1 hier in Figs. 2a und 2b ein in Axialrichtung auskragendes Rastelement 19 auf. Dieses Rastelement 19 ist in der Einbaulage der Bremsstaubpartikelfilter-Anordnung 1 mit einer in Radialrichtung nach innen weisenden Innenstirnseite 20 eingerastet. Es wird eine Fixierung des Haltebauteils 9 relativ zu dem Gehäuse 5 erreicht, die einen Bewegungsfreiraum in einer Radialrichtung nach innen vermindert bzw. verhindert. Dies ergänzt die Verhinderung bzw. Verminderung des Bewegungsfreiraums des Haltebauteils 9 relativ zu dem Gehäuse 5 in der Radialrichtung nach außen mittels der Anlage der in Radialrichtung nach innen weisenden Nutinnenstirnseite 18 mit der in Radialrichtung nach außen weisenden Außenstirnseite 12 des Spundabschnitts 11.

Weiterhin ist in Fig. 2a ebenso ein Arretierelement 21 als an der weiblichen Verbindungsgeometrie 13 vorliegend gezeigt. Das Arretierelement 21 kragt über den Nutgrund 15 aus. Das Arretierelement 21 wird in der Einbaulage formschlüssig in einem Aufnahmeschlitz 22 der männlichen Verbindungsgeometrie 10 aufgenommen (hier der Klarheit der Darstellung wegen an der dem Arretierelement 21 gegenüberliegenden Seite der männlichen Verbindungsgeometrie 10 gezeigt). Die Aufnahme des Arretierelements 21 in dem Aufnahmeschlitz 22 vermindert bzw. verhindert einen Bewegungsfreiraum des Haltebauteils 9 relativ zu dem Gehäuse 5 zumindest in der Axialrichtung und der Radialrichtung.

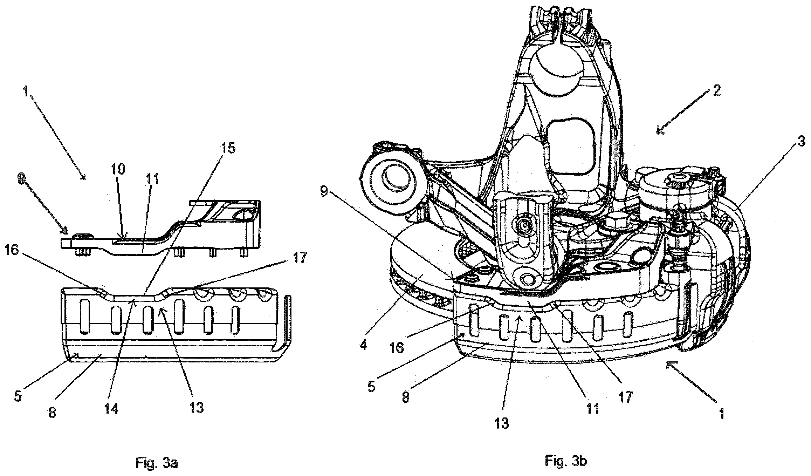

Fig. 3a und 3b zeigen eine dritte Ausführungsform der erfindungsgemäßen Bremsstaubpartikelfilter-Anordnung 1. Fig. 3a zeigt die Bremsstaubartikelfilter-Anordnung 1 nicht in der Einbaulage. Fig. 3b zeigt die Bremsstaubpartikelfilter-Anordnung 1 in der Einbaulage in der Scheibenbremsenanordnung 2. Die dritte Ausführungsform entspricht im Grunde der ersten Ausführungsform der Figs. 1a und 1b. Allerdings weist die dritte Ausführungsform der Bremsstaubpartikelfilter-Anordnung 1 nicht die in Radialrichtung nach innen weisende Nutinnenstirnseite 18 auf. Die Nut 14 ist also hier nicht abgesetzt, sondern durchlaufend ausgebildet.

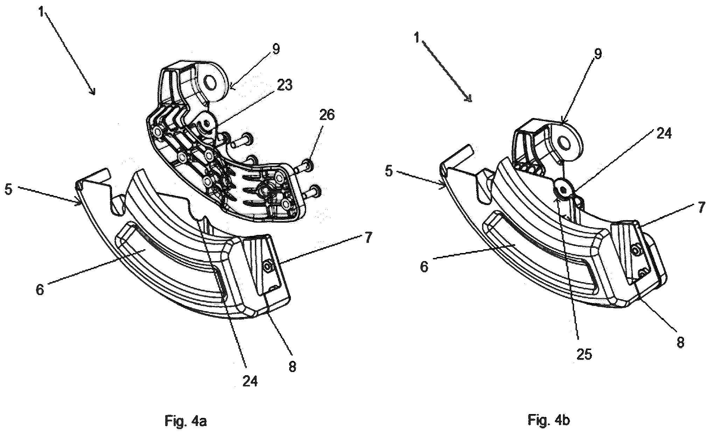

Figs. 4a und 4b zeigen eine vierte Ausführungsform der erfindungsgemäßen Bremsstaubpartikelfilter-Anordnung 1. Fig. 4a zeigt die Bremsstaubartikelfilter-Anordnung 1 nicht in der Einbaulage. Fig. 4b zeigt die Bremsstaubpartikelfilter-Anordnung 1 in der Einbaulage. In der vierten Ausführungsform ist die männliche Verbindungsgeometrie 10 als eine in Axialrichtung auskragende und sich in Umfangsrichtung erstreckende Ringsegmentgeometrie 23 ausgebildet. Die korrespondierende weibliche Verbindungsgeometrie 13 ist als eine Ringsegmentaufnahme 24 ausgebildet. Die Ringsegmentaufnahme 24 ist mittels eines ringsegmentförmigen Abschnitts 25 einer radial nach innen weisenden Innenstirnseite der weiblichen Verbindungsgeometrie 13 so ausgebildet, dass in der Einbaulage das Haltebauteil 9 und das Gehäuse 5 relativ zueinander in Umfangsrichtung bewegbar sind.

Das Haltebauteil 9 und das Gehäuse 5 werden so zwar in ihrer Radiallage in der Einbaulage relativ zueinander ortsfest fixiert, nicht jedoch in ihrer Winkellage in Umfangsrichtung. Damit bleibt ein "Nachkorrigieren" der Winkellage des Haltebauteils 9 relativ zum Gehäuse 5 in der Einbaulage zunächst möglich. Der Bremsstaubpartikelfilter kann so abschließend in seine Einbaulage gedreht werden. In dieser Einbaulage wird er dann ortsfest, beispielsweise mittels Schrauben 26, fixiert.

## Patentansprüche

1. Bremsstaubpartikelfilter-Anordnung (1) zum Auffangen von bei Betätigung einer Scheibenbremsenanordnung (2) entstehenden Bremsstaubpartikeln, mit einem Bremsstaubpartikelfilter, der ein ringsegmentförmiges Gehäuse (5) zur zumindest teilweisen Aufnahme einer Bremsscheibe (4) der Scheibenbremsenanordnung (2) aufweist, wobei das Gehäuse (5) zwei zueinander axial beabstandete Gehäuseseitenwände (6, 7) und zwischen den Gehäuseseitenwänden (6, 7) eine sich zumindest abschnittsweise in Umfangsrichtung erstreckende Gehäuseumfangswand (8) aufweist, und mit zumindest einem in dem Gehäuse (5) angeordneten Filterelement, und mit einem Haltebauteil (9), das dazu eingerichtet ist, den Bremsstaubpartikelfilter in einer relativ zu der Scheibenbremsenanordnung (2) ortsfesten Einbaulage zu halten, **dadurch gekennzeichnet, dass**
das Haltebauteil (9) und das Gehäuse (5) relativ zu einander zumindest bezüglich ihrer Winkellage in Umfangsrichtung und/oder ihrer Radiallage unmittelbar durch einen gegenseitigen Eingriff in der Einbaulage fixierbar sind, wobei der gegenseitige Eingriff mittels eines formschlüssigen Eingriffs zumindest einer männlichen Verbindungsgeometrie (10) mit zumindest einer korrespondierenden weiblichen Verbindungsgeometrie (13) erfolgt, wobei die männliche Verbindungsgeometrie (10) an dem Haltebauteil (9) und die weibliche Verbindungsgeometrie (13) an dem Gehäuse (5) vorliegt oder umgekehrt.

2. Bremsstaubpartikelfilter-Anordnung (1) nach Anspruch 1, **dadurch gekennzeichnet, dass** die männliche Verbindungsgeometrie (10) oder die weibliche Verbindungsgeometrie (13) an zumindest einer der Gehäuseseitenwände (6, 7) vorliegt, bevorzugt wobei die männliche Verbindungsgeometrie (10) oder die weibliche Verbindungsgeometrie (13) sich auf einer dem Filterelement abgewandten Seite der Gehäuseseitenwand (6, 7) von der Gehäuseseitenwand (6, 7) zumindest in Axialrichtung erstreckt.

3. Bremsstaubpartikelfilter-Anordnung (1) nach Anspruch 1 oder 2, **dadurch gekennzeichnet, dass** die weibliche Verbindungsgeometrie (13) zumindest eine Nut (14) mit einem sich in Radialrichtung erstreckenden Nutgrund (15) und zwei in Umfangsrichtung gegenüberliegenden Nutflanken (16, 17) aufweist, vorzugsweise wobei die Nutflanken (16, 17) von dem Nutgrund (15) beginnend in Umfangsrichtung graduell ansteigend ausgebildet sind.

4. Bremsstaubpartikelfilter-Anordnung (1) nach Anspruch 3, **dadurch gekennzeichnet, dass** die Nut (14) an einer in Radialrichtung nach innen weisenden Nutinnenstirnseite (18), die vorzugsweise in der weiblichen Verbindungsgeometrie (13) ausgebildet ist, abgesetzt ist, wobei eine in Radialrichtung nach außen weisende Außenstirnseite (12) der männlichen Verbindungsgeometrie (10) in der Einbaulage an der Nutinnenstirnseite (18) anliegt.

5. Bremsstaubpartikelfilter-Anordnung (1) nach Anspruch 3 oder 4, **dadurch gekennzeichnet, dass** der Nutgrund (15) ein in Axialrichtung nach außen auskragendes Rastelement (19) aufweist, das in der Einbaulage mit einer in Radialrichtung nach innen weisenden Innenstirnseite (21) der männlichen Verbindungsgeometrie (10) eingerastet ist.

6. Bremsstaubpartikelfilter-Anordnung (1) nach einem der Ansprüche 3 bis 5, **dadurch gekennzeichnet, dass** die weibliche Verbindungsgeometrie (13) zumindest ein über den Nutgrund (15) auskragendes Arretierelement (21) aufweist, das in der Einbaulage in einen in der Nut (14) angeordneten Spundabschnitt (11) der männlichen Verbindungsgeometrie (10) eingreift.

7. Bremsstaubpartikelfilter-Anordnung (1) nach einem der Ansprüche 1 bis 6, **dadurch gekennzeichnet, dass** der gegenseitige Eingriff herstellbar ist mittels zumindest einer in Axialrichtung auskragenden und sich in Umfangsrichtung erstreckenden Ringsegmentgeometrie (23) der männlichen Verbindungsgeometrie (10), die mit einer korrespondierenden Ringsegmentaufnahme (24) der weiblichen Verbindungsgeometrie (13) in der Einbaulage, vorzugsweise formschlüssig, in Eingriff ist.

8. Bremsstaubpartikelfilter-Anordnung (1) nach Anspruch 7, **dadurch gekennzeichnet, dass** die Ringsegmentaufnahme (24) mittels eines ringsegmentförmigen Abschnitts (25) einer radial nach innen weisenden Innenstirnseite der weiblichen Verbindungsgeometrie (13) so ausgebildet ist, dass in der Einbaulage das Haltebauteil (9) und das Gehäuse (5) relativ zueinander in Umfangsrichtung bewegbar sind.

9. Bremsstaubpartikelfilter-Anordnung (1) nach Anspruch 7, **dadurch gekennzeichnet, dass** eine umfangsmäßige Ausdehnung der männlichen Verbindungsgeometrie (10) und der weiblichen Verbindungsgeometrie (13) in Radialrichtung variabel ist, wobei insbesondere die umfangsmäßige Ausdehnung der männlichen Verbindungsgeometrie (10) und der weiblichen Verbindungsgeometrie (13) in einer nach radial außen weisenden Richtung abnimmt.

10. Scheibenbremsenanordnung (2) mit einer Bremsscheibe (4), einem Bremssattel (3) und einer Bremsstaubpartikelfilter-Anordnung (1) nach einem der Ansprüche 1 bis 9.

11. Fahrzeug mit einer Scheibenbremsenanordnung (2) nach Anspruch 10, wobei das Haltebauteil (9) an einem Fahrwerksbauteil des Fahrzeugs, insbesondere einem Achsschenkel, bevorzugt an einem Bremssattelhalter, bezüglich eines Bremssattels (3) der Scheibenbremsenanordnung (2) ortsfest befestigt ist.

## Claims

1. Brake dust particle filter assembly (1) for collecting brake dust particles generated when a disk brake assembly (2) is actuated, having a brake dust particle filter which features a ring segment-shaped housing (5) for at least partially accommodating a brake disc (4) of the disc brake assembly (2), wherein the housing (5) features two housing side walls (6, 7) spaced axially apart from one another and, between the housing side walls (6, 7), one housing peripheral wall (8) extending at least sectionwise in the circumferential direction, and having at least one filter element disposed in the housing (5), and having a holding component (9) which is meant to hold the brake dust particle filter in a fixed installation position relative to the disc brake assembly (2), **characterized in that**
the holding component (9) and the housing (5) can be fixed relative to one another at least with respect to their angular position in the circumferential direction and/or their radial position directly through a mutual engagement in the installation position, wherein the mutual engagement is achieved using a form-fitting engagement of at least one male connecting geometry (10) having at least one corresponding female connecting geometry (13), wherein the male connecting geometry (10) is present on the holding component (9) and the female connecting geometry (13) is present on the housing (5) or vice versa.

2. Brake dust particle filter assembly (1) according to claim 1, **characterized in that** the male connecting geometry (10) or the female connecting geometry (13) is present on at least one of the housing side walls (6, 7), preferably wherein the male connecting geometry (10) or the female connecting geometry (13) extends on a side of the housing side wall (6, 7) facing away from the filter element from the housing side wall (6, 7) at least in the axial direction.

3. Brake dust particle filter assembly (1) according to claim 1 or 2, **characterized in that** the female connecting geometry (13) features at least one groove (14) having a groove base (15) extending in the radial direction and two groove flanks (16, 17) opposing in the circumferential direction, preferably wherein the groove flanks (16, 17) are designed to rise gradually in the circumferential direction starting from the groove base (15).

4. Brake dust particle filter assembly (1) according to claim 3, **characterized in that** the groove (14) is disposed on a radially inwardly facing groove inner front face (18), which is preferably designed in the female connecting geometry (13), wherein an exterior front face of the male connecting geometry (10) facing outwardly in the radial direction rests against the groove inner front face (18) in the installed position.

5. Brake dust particle filter assembly (1) according to claim 3 or 4, **characterized in that** the groove base (15) features an axially outwardly projecting latching element (19) which, in the installed position, is latched to a radially inwardly facing inner front face (21) of the male connecting geometry (10).

6. Brake dust particle filter assembly (1) according to one of the claims 3 to 5, **characterized in that** the female connecting geometry (13) features at least one detent member (21) projecting beyond the groove base (15), said detent member engaging, in the installed position, a bung section (11) of the male connecting geometry (10) disposed in the groove (14).

7. Brake dust particle filter assembly (1) according to one of the claims 1 to 6, **characterized in that** the mutual engagement can be realized using at least one ring segment geometry (23) of the male connecting geometry (10) projecting in the axial direction and extending in the circumferential direction, which is in engagement, preferably in a form-fitting manner, with a corresponding ring segment receptacle (24) of the female connecting geometry in the installed position.

8. Brake dust particle filter assembly (1) according to claim 7, **characterized in that** the ring segment receptacle (24) is designed using a ring segment-shaped portion (25) of a radially inwardly facing inner front face of the female connecting geometry (13) in such a way that, in the installed position, the holding component (9) and the housing (5) are movable relative to one another in the circumferential direction.

9. Brake dust particle filter assembly (1) according to claim 7, **characterized in that** a circumferential extension of the male connecting geometry (10) and the female connecting geometry (13) is variable in the radial direction, wherein in particular the circumferential extension of the male connecting geometry (10) and the female connecting geometry (13) decreases in a radially outwardly extending direction.

10. Disc brake assembly (2), having a brake disc (4), a brake caliper (3), and a brake dust particle filter assembly (1) according to one of the claims 1 to 9.

11. Vehicle having a disc brake assembly (2) according to claim 10, wherein the holding component (9) is fixedly attached to a chassis component of the vehicle, in particular a steering knuckle, preferably to a brake caliper holder, with respect to a brake caliper (3) of the disc brake assembly (2).

## Revendications

1. Ensemble de filtre à particules de poussière de frein (1) pour capturer des particules de poussière de frein produites lors de l'actionnement d'un ensemble de frein à disque (2), ayant un filtre à particules de poussière de frein qui présente un boîtier (5) en forme de segment annulaire pour recevoir au moins partiellement un disque de frein (4) de l'ensemble de frein à disque (2), dans lequel le boîtier (5) présente deux parois latérales de boîtier (6, 7) espacées axialement l'une de l'autre et, entre les parois latérales de boîtier (6, 7), une paroi périphérique de boîtier (8) s'étendant au moins sur certaines sections dans le sens circonférentiel, et ayant au moins un élément filtrant disposé dans le boîtier (5), et ayant un composant de maintien (9) qui est conçu pour maintenir le filtre à particules de poussière de frein dans une position de montage stationnaire par rapport à l'ensemble de frein à disque (2), **caractérisé en ce que**
le composant de maintien (9) et le boîtier (5) peuvent être fixés l'un par rapport à l'autre au moins par rapport à leur position angulaire dans le sens circonférentiel et/ou leur position radiale directement par un engagement mutuel dans la position de montage, dans lequel l'engagement mutuel s'effectue par un engagement positif d'au moins une géométrie de liaison mâle (10) ayant au moins une géométrie de liaison femelle correspondante (13), dans lequel la géométrie de liaison mâle (10) se trouve sur le composant de maintien (9) et la géométrie de liaison femelle (13) sur le boîtier (5) ou inversement.

2. Ensemble de filtre à particules de poussière de frein (1) selon la revendication 1, **caractérisé en ce que** la géométrie de liaison mâle (10) ou la géométrie de liaison femelle (13) se trouve sur au moins une des parois latérales de boîtier (6, 7), de préférence dans lequel la géométrie de liaison mâle (10) ou la géométrie de liaison femelle (13) s'étend sur un côté de la paroi latérale de boîtier (6, 7) opposé à l'élément filtrant à partir de la paroi latérale de boîtier (6, 7) au moins dans la direction axiale.

3. Ensemble de filtre à particules de poussière de frein (1) selon la revendication 1 ou 2, **caractérisé en ce que** la géométrie de liaison femelle (13) présente au moins une rainure (14) ayant un fond de rainure (15) s'étendant dans la direction radiale et deux flancs de rainure (16, 17) opposés dans le sens circonférentiel, de préférence dans lequel les flancs de rainure (16, 17) sont conçus de manière à monter progressivement dans le sens circonférentiel en commençant par le fond de rainure (15).

4. Ensemble de filtre à particules de poussière de frein (1) selon la revendication 3, **caractérisé en ce que** la rainure (14) est disposée sur une face frontale intérieure de rainure (18) orientée vers l'intérieur dans la direction radiale, qui est conçue de préférence sur la géométrie de liaison femelle (13), dans lequel une face frontale extérieure de la géométrie de liaison mâle (10), orientée vers l'extérieur dans la direction radiale, est en contact avec la face frontale intérieure de rainure (18) dans la position de montage.

5. Ensemble de filtre à particules de poussière de frein (1) selon la revendication 3 ou 4, **caractérisé en ce que** le fond de rainure (15) présente un élément d'encliquetage (19) en saillie vers l'extérieur dans la direction axiale, qui est enclenché dans la position de montage avec une face frontale intérieure (21) de la géométrie de liaison mâle (10) orientée vers l'intérieur dans la direction radiale.

6. Ensemble de filtre à particules de poussière de frein (1) selon l'une quelconque des revendications 3 à 5, **caractérisé en ce que** la géométrie de liaison femelle (13) présente au moins un élément d'arrêt (21) en saillie par rapport au fond de rainure (15), l'élément d'arrêt s'engageant dans la position de montage dans une section de bonde (11) de la géométrie de liaison mâle (10) disposée dans la rainure (14).

7. Ensemble de filtre à particules de poussière de frein (1) selon l'une quelconque des revendications 1 à 6, **caractérisé en ce que** l'engagement mutuel peut être réalisé par au moins une géométrie de segment annulaire (23) de la géométrie de liaison mâle (10), qui fait saillie dans la direction axiale et s'étend dans le sens circonférentiel, et qui est en prise avec un logement de segment annulaire correspondant (24) de la géométrie de liaison femelle dans la position de montage, de préférence par engagement positif.

8. Ensemble de filtre à particules de poussière de frein (1) selon la revendication 7, **caractérisé en ce que** le logement de segment annulaire (24) est conçu par une section en forme de segment annulaire (25) d'une face frontale intérieure, orientée radialement vers l'intérieur, de la géométrie de liaison femelle (13), de telle sorte que, dans la position de montage, le composant de maintien (9) et le boîtier (5) peuvent être déplacés l'un par rapport à l'autre dans le sens circonférentiel.

9. Ensemble de filtre à particules de poussière de frein (1) selon la revendication 7, **caractérisé en ce qu'**une extension circonférentielle de la géométrie de liaison mâle (10) et de la géométrie de liaison femelle (13) dans la direction radiale est variable, dans lequel notamment l'extension circonférentielle de la géométrie de liaison mâle (10) et de la géométrie de liaison femelle (13) diminue dans une direction dirigée radialement vers l'extérieur.

10. Ensemble de frein à disque (2), ayant un disque de frein (4), un étrier de frein (3) et un filtre à particules de poussière de frein (1) selon l'une quelconque des revendications 1 à 9.

11. Véhicule ayant un ensemble de frein à disque (2) selon la revendication 10, dans lequel le composant de maintien (9) est attaché de manière fixe à un composant de châssis du véhicule, notamment une fusée d'essieu, de préférence à un support d'étrier de frein, par rapport à un étrier de frein (3) de l'ensemble de frein à disque (2).
